Europäisches Patentamt

(19) **European Patent Office** (11) Numéro de publication: **0 216 661**

**Office européen des brevets** **B1**

(12) **FASCICULE DE BREVET EUROPÉEN**

(45) Date de publication du fascicule du brevet: �Int.Cl.⁴: **E 21 B 43/25,** E 21 B 43/32
**12.10.88**

(21) Numéro de dépôt: **86401819.7**

(22) Date de dépôt: **14.08.86**

(54) **Procédé pour la prévention de la venue d'eau dans un puits producteur d'huile et/ou de gaz.**

(30) Priorité: **29.08.85 FR 8512991**

(43) Date de publication de la demande:
**01.04.87 Bulletin 87/14**

(45) Mention de la délivrance du brevet:
**12.10.88 Bulletin 88/41**

(73) Titulaire: **INSTITUT FRANCAIS DU PETROLE, 4,
Avenue de Bois- Préau, F-92502 Rueil- Malmaison
(FR)**

(72) Inventeur: **Kohler, Norbert, 14, rue des Chenêts,
F-78100 Saint- Germain- en- Laye (FR)**
Inventeur: **Tabary, René, 13, avenue Charles de
Gaulle Escalier O, F-78230 Le Pecq (FR)**
Inventeur: **Zaitoun, Alain, 20, Place Martin Luther
King, F-76000 Rouen (FR)**

(84) Etats contractants désignés:
**DE GB NL**

(56) Documents cité:
**EP-A-0 146 981**
**US-A-3 386 514**
**US-A-4 444 265**

**0 216 661**

**Description**

La présente invention est relative à un procédé pour la réduction ou l'arrêt complet d'une venue d'eau d'une formation vers un puits producteur. Ce procédé, basé sur l'injection dans ce puits producteur d'une dispersion aqueuse de polysaccharide hydrosoluble, réalise le blocage de l'eau sans pour autant diminuer le passage de l'huile ou de gaz vers ce puits. Il présente un intérêt particulièrement grand lorsque l'eau est chaude et/ou salée, par exemple à une température de 70 à 130°C et/ou une salinité d'au moins 30 g/l exprimée en NaCl.

L'eau sous forme de saumure existe souvent dans la même formation que l'huile ou le gaz. La mise en production des réservoirs contenant de l'huile ou du gaz entraîne simultanément la production d'eau en quantité telle qu'elle pose des problèmes importants: formation de dépôts au voisinage du puits ou dans le tubage, augmentation de la corrosion des pièces métalliques, création d'émulsions avec l'huile, très difficiles à rompre. Dans le contexte des forages en mer, la production d'eau en quantité importante pose de plus des problèmes de stockage et de rejet.

De nombreuses méthodes destinées à réduire les venues d'eau dans les puits de production ont été proposées et testées sur champ; elles consistent en général à mettre en place dans la formation, à l'interface entre l'eau et l'huile ou le gaz, une barrière imperméable constituée par exemple de ciments, de résines, de suspensions de particules solides ou de paraffines. Ces agents colmatants ont le désavantage de bloquer presque autant l'huile ou le gaz que l'eau, en particulier lorsque la venue d'eau est occasionnée par un phénomène de formation de cône d'eau (coning).

Plus récemment, on a proposé l'emploi de polyacrylamides hydrolysés. Toutefois, ce type de polymère est surtout efficace contre les venues d'eau de faible salinité et perd de son activité lorsque la salinité de l'eau produite augmente. De plus, sous l'action de la température, ces polyacrylamides s'hydrolysent progressivement, ce qui entraîne leur précipitation en présence d'ions plurivalents.

Une autre technique de prévention des venues d'eau vers les puits producteurs utilise la faculté de réticulation de divers polymères, polyacrglamides et gommes xanthanes, par des sels d'ions trivalents tels que les ions chrome et aluminium. Il a été constaté que cette réticulation sous forme de gels plus ou moins compacts entraîne bien l'arrêt ou la réduction de la venue d'eau, mais affecte également dans une grande mesure la production d'huile ou de gaz.

La présente invention a pour objet un procédé permettant de réduire les venues d'eau dans les puits de production d'huile et/ou de gaz sans affecter de manière gênante la production de l'huile ou du gaz. Ce procédé consiste à injecter une dispersion aqueuse d'un polysaccharide dans la formation entourant un puits de production, à partir dudit puits, puis à remettre le puits en production et à recueillir les fluides produits. Le procédé est caractérisé en ce que ladite dispersion aqueuse d'un polysaccharide est injectée à un débit tel que le gradient de cisaillement est d'au moins 50 sec$^{-1}$, mesuré à l'entrée de la formation, et suffisant pour réduire la viscosité de la dispersion aqueuse de polysaccharide injectée d'au moins 50 % par rapport à la viscosité au gradient de cisaillement de 1 sec$^{-1}$.

De préférence, l'injection est effectuée sous un débit et/ou une pression suffisants pour permettre une introduction aisée de la dispersion dans la formation mais à une pression inférieure à la pression limite de couche ou pression de fracturation.

Par débit et/ou pression suffisants, on entend un débit et/ou une pression correspondants à un gradient de cisaillement d'au moins 50 sec$^{-1}$. La viscosité de la solution de polysaccharide à ce gradient est de préférence inférieure à 10 mPa.s, par exemple de 1 - 9 mPa.s (1 mPa.s = cp).

Typiquement une diminution de viscosité d'au moins 50 % par rapport à la viscosité mesurée à un gradient de cisaillement de 1 sec$^{-1}$ est préférée. Le gradient de cisaillement est défini comme

$\dot{\gamma} = \frac{4v}{r}$ où

v = vitesse de déplacement linéaire en centimètre/sec à l'entrée du gisement,

v = $\frac{q}{S}$ où

q = débit en cm$^3$/sec;

S = surface en cm$^2$;

r = rayon de pore moyen = $(8 K/\emptyset)^{1/2}$ exprimé en centimètre,

où

k = perméabilité du réservoir en cm$^2$ (1 cm$^2$ = $10^8$ Darcys)

$\emptyset$ = porosité, exprimée en %.

Remarque: unités CGS.

Parmi les polysaccharides satisfaisant aux critères de l'invention, on peut citer des polysaccharides non ioniques comme les glucanes et en particulier le scléroglucane ainsi que des polysaccharides anioniques, comme par exemple les gommes xanthanes.

Des avantages non négligeables de l'utilisation de ces polysaccharides conformément au présent procédé par rapport aux polyacrylamides et leurs copolymères résident dans leur moindre sensibilité à la dégradation mécanique par suite de l'utilisation de contraintes élevées essentiellement aux abords du puits, à leur compatibilité plus élevée avec des eaux salées et au fait que sous l'action de la température, ils ne subissent

2

pas une réaction d'hydrolyse qui affecte la stabilité des polyacrylamides.

Parmi les polysaccharides, le scléroglucane s'avère être le plus actif. La concentration en polymère en dispersion aqueuse est liée d'une part à la viscosité qu'il développe et d'autre part à son caractère colmatant. Les concentrations utiles se situent le plus souvent entre 200 et 5000 ppm en poids de polymère et de préférence entre 500 et 3000 ppm, plus particulièrement entre 500 et 2000 ppm.

Le domaine de température visé pour la mise en oeuvre des polysaccharides est compris entre l'ambiante et 130°C. Comme déjà souligné, un intérêt d'application particulier concerne les températures de 70 à 130°C et/ou les salinités d'au moins 30 g/l.

Dans les exemples qui suivent, on a procédé à des tests représentatifs des venues d'eau dans un puits. Ces tests consistent à simuler en laboratoire sur des carottes de réservoirs consolidées ou non la mise en place de la solution de polymère à différents débits d'injection et à injecter ensuite dans le sens opposé les fluides produits, à savoir en particulier de l'eau et de l'huile. Ayant déterminé au préalable les perméabilités initiales de ces carottes respectivement à l'eau et à l'huile, cette manière de procéder permet de se faire une idée des perméabilités finales pour ces mêmes fluides après mise en place du polymère et donc d'en déduire des valeurs de réduction de perméabilité. Si les perméabilités initiales et finales sont identiques, cette réduction de perméabilité est par définition égale à 1.

## Exemple 1:

Dans un cyclindre en acier inoxydable de 30 cm de long et de 4 cm de diamètre, on procède à la reconstitution d'un milieu poreux non consolidé par tassage de sable d'Entraigues brut. On mesure la perméabilité de ce milieu poreux par injection d'eau de mer reconstituée (30 g/l de NaCl et 3 g/l de $CaCl_2$, $2H_2O$) à des débits variables compris entre 100 et 350 $cm^3$/h, ce qui correspond à des gradients de cisaillement compris entre 29 et 102 $sec^{-1}$ et on mesure les pertes de charge à ces débits aux bornes du milieu poreux. Par application de la loi de Darcy, on détermine une perméabilité à l'eau de ce milieu poreux qui est constante pour tous les débits et égale à 3,24 Darcys et la porosité $\emptyset$ = 44 %.

On prépare par ailleurs dans la même eau de mer une dispersion contenant 1 g/litre (1000 ppm) de scléroglucane en poudre et, à l'aide d'un viscosimètre à faible gradient, on trace la courbe rhéologique de la solution de polysaccharide obtenue. Les viscosités relatives en fonction du gradient de cisaillement ainsi déterminées sont respectivement de 300 mPa.s (centipoises) à 1 $sec^{-1}$ et de 7 mPa.s à 100 $sec^{-1}$.

On procède à l'injection de cette solution de scléroglucane dans le sens A vers B à travers le massif de sable à un débit de 350 $cm^3$/h, ce qui correspond à un gradient de cisaillement ($\dot{\gamma}$) de 101,85 sec et l'on constate que les pertes de charge entre l'entrée et la sortie du massif ainsi que les viscosités s'équilibrent très rapidement et conservent la même valeur jusqu'à la fin de l'injection (perte de charge relative = $R_m$ = 12, perte de viscosité = 0 %).

Après l'injection de huit fois le volume de pore de la solution de polysaccharide, on arrête l'injection de polymère et l'on procède dans le sens B → A à l'injection au même débit de 350 $cm^3$/h ($\dot{\gamma}$ = 101,85 $sec^{-1}$) d'eau de mer, simulant ainsi une venue d'eau du réservoir vers le puits. Après déplacement total du polymère non retenu irréversiblement dans le milieu poreux suivi par la mesure de la viscosité des effluents, on détermine une nouvelle perméabilité à l'eau de mer. On s'aperçoit que la perméabilité ainsi mesurée est 4,3 fois inférieure à la perméabilité initiale en l'absence de polymère. La réduction de perméabilité ($R_k$) à ce débit est donc de 4,3, valeur qui sert de référence.

Toujours dans le sens B vers A, on poursuit l'injection d'eau de mer, en réduisant toutefois progressivement le débit jusqu'à 100 $cm^3$/h et, par mesure des pertes de charge correspondantes aux bornes du massif, on constate que les perméabilités obtenues diminuent avec le débit (et avec le gradient de cisaillement) et que par conséquent, les réductions de perméabilité ($R_k$) augmentent. Cette évolution est caractéristique de l'effet colmatant occasionné par la présence de polymère piégé à l'intérieur du massif. Rappelons qu'en l'absence de polymère, les perméabilités mesurées sont indépendantes du débit d'injection d'eau de mer.

Le tableau I rassemble les résultats de réduction de perméabilité ($R_k$) obtenues sur ce massif pour différents débits de production d'eau de mer (q) et donc différents gradients de cisaillements ($\dot{\gamma}$).

3

0 216 661

**Tableau I:**  Influence sur la production d'eau de l'injection de scléroglucane en milieu non consolidé à gradient élevé ($\dot{\gamma} = 101{,}85$ sec$^{-1}$).

| q en cm$^3$/h | $\dot{\gamma}$ en sec$^{-1}$ | $R_k$ Eau de mer | |
|---|---|---|---|
| 350 | 101,85 | 4,31 | |
| 300 | 87,35 | 4,41 | Après l'injection |
| 250 | 72,75 | 4,58 | de 1000 ppm de |
| 200 | 58,2 | 4,98 | polymère |
| 150 | 43,65 | 5,32 | |
| 100 | 29,1 | 6,05 | |
| 350 | 101,85 | 1 | Sans polymère |

L'injection de scléroglucane dans un massif non consolidé de sable permet donc de réduire la perméabilité à l'eau et donc de freiner la venue d'eau.

**Exemple 2:**

Cet exemple est destiné à montrer que si l'on ne procède pas, conformément à l'invention, à l'injection de la solution de polysaccharide à un débit suffisant, le polymère devient colmatant et les pertes de charge relatives aux bornes de la carotte (Rm) augmentent progressivement.

Une dispersion à 1000 ppm de scléroglucane en poudre dans l'eau de mer, identique à celle de l'exemple 1, est injectée à un débit q = 20 cm$^3$/h ($\dot{\gamma} = 5{,}8$ sec$^{-1}$) dans un massif non consolidé de sable d'Entraigues identique à celui de l'exemple 1 (longueur 30 cm, diamètre 4 cm) dont la perméabilité à l'eau de mer est de 3,24 Darcys. Les viscosités de la solution de scléroglucane sont respectivemen( de 300 mPa.s à 1 sec$^{-1}$ et de 210 mPa.s au gradient de 5,8 sec$^{-1}$ on opère comme dans l'exemple 1 et mesure les pertes de charge entre l'entrée et la sortie du milieu poreux (tableau II); on constate que ces pertes de charge augmentent progressivement au cours de l'injection et qu'aucune stabilisation on'est obtenue après 5,8 volumes de pore injectés.

De plus la viscosité de l'effluent chute au cours de l'injection ce qui est représentatif d'un colmatage progressif du milieu poreux par la solution de polymère.

**Tableau II:**  Incidence de l'injection à gradient faible ($\dot{\gamma} = 5{,}8$ sec$^{-1}$) d'une solution de scléroglucane en milieu non consolidé.

| Volumes de pore injectés | Pertes de charge relatives (Rm) | Pertes de viscosité en % |
|---|---|---|
| 0 | 1 | 0 |
| 0,5 | 7 | 1,2 |
| 3,4 | 94 | 3,3 |
| 5,2 | 279 | 4,8 |
| 5,8 | 517 | 8 |

**Exemple 3:**

Les conditions de l'exemple 1 sont reconduites avec comme seule variante l'utilisation d'un grès argileux consolidé (grès des Vosges) de longueur 8 cm et de diamètre 4 cm, inséré dans une cellule Hassler.

L'injection d'eau de mer à différents débits permet de déterminer la perméabilité de cette carotte qui a été trouvée égale à 2,36 Darcys et la porosité Ø = 21,8 %.

On procède ensuite à l'injection dans la carotte dans le sens A vers B d'une solution à 1000 ppm dans l'eau de mer de scléroglucane sous forme poudre à un débit de 200 cm$^3$/h, ce qui correspond à un gradient de cisaillement de 87 sec$^{-1}$ et à une viscosité égale à 8 mPa.s. A noter la viscosité de 300 mPa.s pour $\dot{\gamma} = 1$ sec$^{-1}$. Après l'injection de 24,2 volumes de pore de la solution de polymère, on procède à l'injection en sens contraire (dans le sens B vers A) et au même débit de 200 cm$^3$/h d'eau de mer jusqu'à déplacement complet du polymère non piégé. On procède à une détermination de la perméabilité à ce débit et l'on constate que la perméabilité initiale est réduite d'un facteur 5,84. En mesurant les pertes de charge à débits décroissants d'eau de mer, on constate comme dans l'exemple 1 que les perméabilités à l'eau de mer diminuent avec le débit et donc que les réductions de perméabilité augmentent. Le tableau III rassemble les principaux résultats obtenus.

4

**Tableau III:** Influence sur la production d'eau de l'injection de scléroglucane en milieu non consolidé à gradient élevé ($\dot{\gamma}$ = 87,2 sec⁻¹).

| q en cm³/h | $\dot{\gamma}$ en sec⁻¹ | $R_k$ Eau de mer | |
|---|---|---|---|
| 200 | 87,2 | 5,84 | |
| 100 | 43,6 | 6,67 | Après l'injection |
| 50 | 21,8 | 7,49 | de 1000 ppm de |
| 35 | 15,26 | 7,91 | polymère |
| 25 | 10,9 | 8,90 | |
| 15 | 6,54 | 9,59 | |
| 200 | 87,2 | 1 | Sans polymère |

La mise en place du scléroglucane dans un massif de grès des Vosges permet donc bien de réduire la perméabilité de ce massif à l'eau de mer et donc de freiner la production d'eau.

**Exemple 4:**

Une expérience analogue à celle de l'exemple 1 a été réalisée sur un massif non consolidé de sable d'Entraigues dans le but de vérifier l'effet de la mise en place d'une solution de polysaccharide simultanément sur les perméabilités à l'eau et à l'huile.

On mesure tout d'abord la perméabilité de l'échantillon par injection d'eau de mer reconstituée à des débits variables compris entre 10 et 90 cm³/h et, par mesure des pertes de charge à ces débits, on en déduit une perméabilité initiale à l'eau de mer égale à 3,68 Darcys.

On procède de même par injection d'huile raffinée à plusieurs débits dans le même échantillon du milieu poreux et l'on en déduit une perméabilité à l'huile égale à 3,86 Darcys.

On procède à une seconde injection d'eau de mer à plusieurs débits et on en déduit une perméabilité à l'eau en présence d'huile résiduelle égale à 0,879 Darcys et une saturation en huile résiduelle égale à 24 %. A ce moment, le milieu poreux se trouve dans les conditions d'un réservoir produisant à la fois de l'eau et de l'huile.

La mise en place du polymère se fait de la même façon que dans l'exemple 1, mais à un débit différent, à savoir injection dans le sens A vers B, au débit de 90 cm³/h, ce qui correspond à un gradient de cisaillement de 88,47 sec⁻¹*, d'une solution à 1 g/litre, dans l'eau de mer, de scléroglucane initialement sous forme de poudre. Les pertes de charge aux bornes du massif se stabilisent très rapidement et les viscosités entre l'entrée et la sortie du massif sont constantes. 30 volumes de pore de solution de polymère ont été mis en place.

On déplace le polymère en excès par injection dans le sens B vers A d'eau de mer au débit de 90 cm³/h jusqu'à ce qu'il n'y ait plus de polymère dans les effluents. On procède alors directement à l'injection d'huile à plusieurs débits dans le sens B vers A et, par mesure des pertes de charge à ces débits, on constate que la perméabilité initiale à l'huile est conservée. Il n'y a donc pas de réduction de perméabilité à l'huile.

On procède ensuite à la mesure des perméabilités en eau de mer en présence d'huile résiduelle par injection d'eau de mer à débits variables toujours dans le sens B vers A et l'on constate que l'on ne retrouve plus la perméabilité initiale à l'eau de 0,879 Darcys, mais des valeurs de perméabilité d'autant plus faibles que le débit décroît. Comme précédemment, la réduction de perméabilité à l'eau de mer en présence d'huile résiduelle augmente lorsque le débit d'eau injecté diminue.

Les principaux résultats sont reproduits sur le tableau IV.

La mise en place du scléroglucane en milieu poreux permet donc de réduire la perméabilité à l'eau de ce milieu poreux et donc de freiner la production d'eau, mais n'affecte aucunement la perméabilité à l'huile et donc la production d'huile.

\* (viscosité mesurée à ce gradient: 8 mPa.s). La viscosité était de 300 mPa.s pour un gradient de 1 sec⁻¹.

**Tableau IV:** Influence sur la production d'eau et d'huile de l'injection de scléroglucane en milieu non consolidé à gradient élevé (88,47 sec-1).

| q en cm³/h | $\dot\gamma$ en sec-1 | $R_k$ huile | $R_k$ Eau de mer | |
|---|---|---|---|---|
| 90 | 88,47 | 1,00 | - | |
| 90 | 88,47 | - | 1,00 | Sans polymère |
| 90 | 88,47 | 1,00 | 5,40 | |
| 50 | 49,18 | 1,00 | 6,40 | Après l'injection |
| 30 | 29,49 | 1,00 | 8,66 | de 1000 ppm de |
| 20 | 19,66 | - | 9,95 | polymère |
| 15 | 14,75 | 1,00 | 10,91 | |
| 10 | 9,83 | - | 13,6 | |

**Exemple 5:**

Une expérience analogue à celle de l'exemple 1 a été réalisée à 80°C en vue de tester l'influence de la température sur la réduction de perméabilité à l'eau de mer en présence et en l'absence de polymère.

La perméabilité à l'eau de mer du massif non consolidé de sable d'Entraigues a été trouvée égale à 2,50 Darcys de manière indépendante du débit d'injection d'eau et la porosité $\emptyset = 44\%$.

On procède à l'injection d'une dispersion à 500 mg/litre de scléroglucane sous forme poudre dans l'eau de mer au débit de 350 cm³/h, ce qui correspond à un gradient de cisaillement de 93,45 sec-1*.

Après déplacement du polymère en excès par l'eau de mer, on fait varier le débit d'injection d'eau de mer comme précédemment et l'on constate que la perméabilité décroît avec le débit (tableau V).

On constate qu'à 80°C l'effet de la mise en place du polymère permet de réduire en moyenne la perméabilité par un facteur 2 avec deux fois moins de polymère.

* La viscosité mesurée à ce gradient est d'environ 4 mPa.s alors qu'elle est de 80 mPa.s à 1 sec-1.

**Tableau V:** Influence sur la production d'eau de l'injection de scléroglucane en milieu non consolidé a 80°C ($\dot\gamma = 93,45$ sec-1).

| q en cm³/h | $\dot\gamma$ en sec-1 | $R_k$ Eau de mer | |
|---|---|---|---|
| 350 | 93,45 | 1,00 | Sans polymère |
| 350 | 93,45 | 1,78 | |
| 300 | 80,1 | 1,81 | En présence de |
| 250 | 66,7 | 1,85 | 500 ppm de |
| 200 | 53,4 | 1,98 | polymère |
| 100 | 40,05 | 2,19 | |
| 50 | 26,7 | 2,42 | |

**Exemple 6:**

Cet exemple est destiné à montrer que l'invention n'est pas limitée au seul scléroglucane mais peut également s'appliquer à d'autres polysaccharides, comme par exemple les gommes xanthanes.

A partir de gomme xanthane en poudre, qualité récupération assistée du pétrole, on prépare une dispersion à 2,5 g/l dans l'eau de mer. La solution trouble obtenue est rendue limpide par un traitement enzymatique qui ne fait pas partie de l'invention. On établit la courbe rhéologique de la solution limpide obtenue à l'aide d'un viscomètre à faible gradient. Les viscosités mesurées sont respectivement de 440 mPa.s pour un gradient de cisaillement de 1 sec-1 et de 8,9 mPa.s à 86,94 sec-1.

Le milieu poreux utilisé est un grès des Vosges dont la perméabilité à l'eau de mer a été trouvée égale à 1,84 Darcys à 30°C de manière indépendante du débit d'injection d'eau de mer et la porosité $\emptyset = 22,7\%$.

On procède à l'injection à un débit constant de 180 cm³/h, ce qui correspond à un gradient de cisaillement de

86,94 sec$^{-1}$, de la solution de gomme xanthane à 2500 ppm dans l'eau de mer. Après stabilisation des pertes de charge aux bornes de la carotte de grès et équilibrage des viscosités, on procède comme précédemment à l'injection d'eau de mer en sens contraire de l'injection de polymère jusqu'à déplacement complet de ce dernier. En faisant varier ensuite le débit d'injection d'eau, on constate que la perméabilité initiale est réduite du fait de la présence de polymère piégé et absorbé en milieu poreux. Les valeurs de réduction de perméabilité obtenues sont toutefois plus faibles que pour le scléroglucane mais comme pour ce dernier, ces valeurs augmentent lorsque le débit de production d'eau de mer décroît.

Les résultats du tableau VI montrent qu'il est possible de freiner les venues d'eau en utilisant des solutions concentrées de gomme xanthane.

**Tableau VI**: Influence sur la production d'eau de l'injection de gomme xanthane en milieu consolidé à 30°C ($\dot{\gamma}$ = 86,94 sec$^{-1}$).

| q en cm$^3$/h | $\dot{\gamma}$ en sec$^{-1}$ | $R_k$ Eau de mer | |
|---|---|---|---|
| 180 | 86,94 | 1,00 | Sans polymère |
| 180 | 86,94 | 1,44 | |
| 90 | 43,47 | 1,57 | En présence de |
| 60 | 28,98 | 1,62 | 2500 ppm de |
| 40 | 19,32 | 1,65 | polymère |
| 20 | 9,66 | 1,73 | |

Lorsqu'on applique le processus de l'exemple 4 au grès des Vosges ci-dessus, c'est-à-dire que l'on répète l'expérience de l'exemple en présence d'huile, on constate, comme dans l'exemple 4, que l'on réduit la perméabilité à l'eau sans affecter la perméabilité à l'huile.

## Revendications

1. Procédé pour la prévention de la venue d'eau dans un puits producteur d'huile et/ou de gaz, selon lequel on injecte une dispersion aqueuse d'un polysaccharide dans la formation entourant le puits producteur, à partir dudit puits, puis on remet le puits en production et l'on recueille les fluides produits, caractérisé en ce que ladite dispersion aqueuse d'un polysaccharide est injectée à un débit tel que le gradient de cisaillement est d'au moins 50 sec$^{-1}$, mesuré à l'entrée de la formation, et suffisant pour réduire la viscosité de la dispersion aqueuse de polysaccharide injectée d'au moins 50 % par rapport à la viscosité au gradient de cisaillement de 1 sec$^{-1}$.

2. Procédé selon la revendication 1, caractérisé en ce que le polysaccharide est un scléroglucane.

3. Procédé selon la revendication 1 ou 2, caractérisé en ce que la concentration en polysaccharide de la dispersion aqueuse est de 200 à 5000 parties par million en poids.

4. Procédé selon la revendication 3 dans lequel la concentration en polysaccharide est de 500 à 2000 parties par million en poids.

5. Procédé selon l'une des revendications 1 à 4, caractérisé en ce que la remise du puits en production s'effectue à un débit et/ou une pression d'eau du gisement égal ou inférieur à celui qui avait été utilisé pour l'injection de la composition aqueuse.

6. Procédé selon l'une quelconque des revendications 1 à 5, caractérisé en ce qu'il est appliqué au cas où l'eau de la formation est à une température de 70 à 130°C.

7. Procédé selon l'une quelconque des revendications 1 à 6, caractérisé en ce qu'il est appliqué au cas où l'eau de la formation est à une salinité d'au moins 30 g/l, exprimée en NaCl.

8. Procédé selon l'une quelconque des revendications 1 à 7, caractérisé en ce que la viscosité de la dispersion aqueuse de polysaccharide est de 1 à 9 mPa.s.

## Patentansprüche

1. Verfahren zur Verhinderung des Wassereinbruchs in ein Öl und/oder Gas produzierendes Bohrloch, wobei man eine wäßrige Dispersion eines Polysaccharids in die das Produktionsbohrloch umgebende Formation, ausgehend von diesem Bohrloch, einspritzt und dann das Bohrloch wieder auf Produktion stellt und die erzeugten Fluide sammelt, dadurch gekennzeichnet, daß die wäßrige Dispersion eines Polysaccharids in einer Menge derart eingespritzt wird, daß der Schergradient wenigstens 50 sec$^{-1}$, gemessen am Eintritt in die Formation, beträgt und ausreichend ist, um die Viskosität der wäßrigen eingespritzten Polysacchariddispersion um wenigstens 50 %, bezogen auf die Viskosität beim Schergradienten von 1 sec$^{-1}$ zu vermindern.

2. Verfahren nach Anspruch 1, dadurch gekennzeichnet, daß das Polysaccharid ein Skleroglukan ist.

3. Verfahren nach Anspruch 1 oder, 2, dadurch gekennzeichnet, daß die Polysaccharidkonzentration der wäßrigen Dispersion 200 bis 5000 Gew.-ppm beträgt.

4. Verfahren nach Anspruch 3, dadurch gekennzeichnet, daß die Polysaccharidkonzentration 500 bis 2000 Gew.-ppm beträgt.

5. Verfahren nach einem der Ansprüche 1 bis 4, dadurch gekennzeichnet, daß die Rückstellung des Bohrlochs auf Produktion bei einem Durchsatz und/oder einem Lagerstättendruck gleich oder kleiner dem vorgenommen wird, der zum Einspritzen der wäßrigen Zusammensetzung angewendet worden ist.

6. Verfahren nach einem der Ansprüche 1 bis 5, dadurch gekennzeichnet, daß es auf den Fall angewendet wird, wo das Wasser der Formation sich auf einer Temperatur zwischen 70 und 130°C befindet.

7. Verfahren nach einem der Ansprüche 1 bis 6, dadurch gekennzeichnet, daß es auf den Fall angewendet wird, daß das Wasser der Formation eine Salinität von wenigstens 30 g/l, ausgedrückt als NaCl, aufweist.

8. Verfahren nach einem der Ansprüche 1 bis 7, dadurch gekennzeichnet, daß die Viskosität der wäßrigen Polysacchariddispersion 1 bis 9 mPa.s. beträgt.

## Claims

1. A process for preventing water inflow in an oil- and/or gas-producing well, wherein an aqueous dispersion of a polysaccharide is injected in the formation surrounding the producing well, from said well, and then the well is brought again in production and the produced fluids are recovered, characterized in that said aqueous dispersion of polysaccharide is injected at a such a rate that the shear gradient, measured at the input of the formation, is at least 50 sec.$^{-1}$ and is sufficient to reduce the viscosity of the injected aqueous dispersion of polysaccharide by at least 50 % with respect to the viscosity at a shear gradient of 1 sec.$^{-1}$.

2. A process according to claim 1, characterized in that the polysaccharide is a scleroglucane.

3. A process according to one of claims 1 and 2, characterized in that the polysaccharide concentration of the aqueous dispersion is from 200 to 5000 parts per million of parts by weight.

4. A process according to claim 3, wherein the polysaccharide concentration is from 500 to 2000 parts per million of parts by weight.

5. A process according to one of claims 1 to 4, characterized in that the new bringing in production of the well is performed at a field water flow rate and/or pressure equal to or lower than that previously used for the injection of the aqueous dispersion.

6. A process according to any one of claims 1 to 5, applied to a formation whose water is at a temperature from 70 to 130°C.

7. A process according to any one of claims 1 to 6, applied to a formation whose water has a salt content of at least 30 g/l, expressed as NaCl.

8. A process according to any one of claims 1 to 7, characterized by a viscosity of the aqueous dispersion of polysaccharide from 1 to 9 mPa.s.